# EUROPEAN PATENT SPECIFICATION

(11) **EP 2 728 998 B1**
(45) Date of publication and mention of the grant of the patent: **30.11.2016**
(21) Application number: 12740635.3
(22) Date of filing: 27.06.2012
(51) Int. Cl.: A01M 29/24, A01M 29/26, A01M 29/28

(54) **DETERRENT DEVICE**
ABSCHRECKUNGSVORRICHTUNG
DISPOSITIF DE DISSUASION

(30) Priority: 04.07.2011 GB 201111328
(43) Date of publication of application: 14.05.2014
(73) Proprietor: Pelsis Limited, Grimbald Crag Close Knaresborough North Yorkshire HG5 8PJ (GB)
(72) Inventor: TURNER, Grahame Douglas Aleric, Ringwood Hampshire BH24 3EB (GB)
(74) Representative: Marles, Alan David
(86) International application number: PCT/GB2012/051499
(87) International publication number: WO 2013/005006

(56) References cited:
- WO-A1-2011/015867
- WO-A2-2005/055865
- US-A1- 2008 028 668
- US-A1- 2010 180 490

## Description

The present invention relates to deterrent devices and more particularly to electric devices intended to deter the presence of birds, animals or other creatures such as reptiles and insects.

It is known to provide deterrent devices comprising an electrified elongate track on various surfaces such as walls, fences, roofs, window ledges, parapets etc. The elongate tracks usually have a pair of exposed, elongate metal strips which are spaced apart along the length of the track, the metal strips being connected to a source of electricity often known as an energiser. Contact with the strips by a creature will result in a controlled electric shock being imparted to the creature, thereby causing the creature to move away. Other arrangements are known in which only a single metal strip is provided and others in which more than two metal strips are provided.

One key problem is encountered with some known devices in which braids/knitted meshes are stitched to a PVC base. The stitching holes can allow water ingress, which can in turn lead to short circuiting/arcing between the two conductors. The electricity can pass down from the braid through the stitching holes to the mounting surface, then if the mounting surface is metal or is damp the electricity can pass through that, and then back up through the damp stitching holes on the other side. This short circuiting/arcing can cause loss of voltage/power, rendering the system ineffective and it can also cause disturbing loud clicks every time the energiser pulses and also damage to the device.

US 2008/0028668 and WO 2011/015867 each disclose a deterrent device in which conductive elements are provided in grooves in an elongate insulating base. Each conductive element comprises an elongate metallic element which is wholly encased in a conductive plastic/polymer.

According to the present invention there is provided a deterrent device comprising an elongate body formed from an insulating material, at least one elongate metallic conductor and at least one conductive polymer strip in contact with the or each metallic conductor along its full length such that the upward facing surface of the metallic conductor is not exposed characterised in that said at least one metallic conductor is provided on an upward facing surface of the elongate body, in that said at least one conductive polymer strip is provided over the or each metallic conductor and seals with the elongate body on each lateral side of the metallic conductor with the metallic conductor disposed and held captive therebetween.

Preferably two elongate metallic conductors are provided on the device, each being covered with a conductive polymer strip. Usually the two metallic conductors are parallel to each other along the length of the elongate body.

In preferred arrangements the upward facing surface of the elongate body has two elongate sloping surfaces which meet at a central raised elongate apex, one metallic conductor being provided on each side of the apex.

With some embodiments each metallic conductor is received in a recess formed in the upward facing surface of the elongate body, the recess having elongate lateral side edges. Often the conductive polymer strip extends from one lateral edge of the recess to the other, thereby sealing the metallic conductor in the recess.

It is a preferred feature that the elongate body incorporates a lengthwise extending hollow open only at its two ends. Another preferred feature is that the elongate body has a base surface oppositely disposed to said upward facing surface, the upward facing surface overhanging the base surface along each lateral edge of the elongate body. In some arrangements the base surface is formed with grooves to improve adhesive contact area when being secured in use.

Conveniently, the elongate body is made from PVC, the conductive polymer strip is made from PVC incorporating carbon black in the form of particles or filaments and the metallic conductor is in the form of copper strip.

There is also provided a method for producing the above described deterrent device comprising the step of co-extruding the elongate body and the conductive polymer strip or strips with the metallic conductor disposed and held captive therebetween.

Embodiments of the present invention will now be described in more detail. The description makes reference to the accompanying drawings in which:

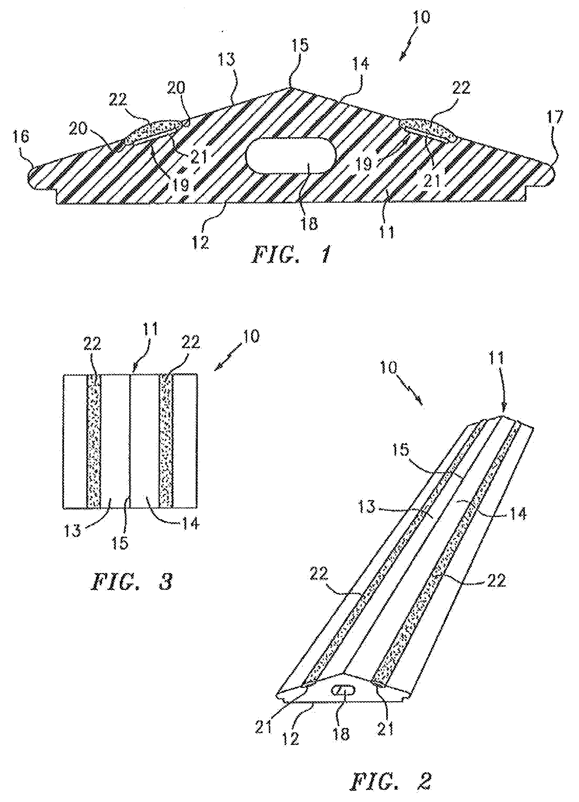

Figure 1 is a lateral cross-section through a deterrent device according to the present invention,
Figure 2 is a perspective view of a length of deterrent device shown in figure 1, and
Figure 3 is a plan view of a portion of deterrent device shown in figure 1.

In the figures there is shown a deterrent device 10 comprising an elongate body 11 formed from an insulating plastics material such as PVC. Other non-conductive materials are of course possible. Ideally, the elongate body 11 is somewhat flexible to enable it to be bent according to the contours of the surface to which it is to be mounted. However, the elongate body 11 could be substantially rigid if flexibility is not desired. The elongate body 11 has a generally flat base surface 12 and a pair of sloping upper surfaces 13, 14 which meet centrally at a raised apex 15 which may be pointed or rounded. The lateral edges 16, 17 of the upper surfaces remote from the apex 15 each overhang the base surface 12. The sloping surfaces 13, 14 of the elongate body 11 enable water such as rain to run off the device and the overhanging edges 16, 17 facilitate drainage of said water and help prevent short circuiting/arcing. The elongate body 11 can be secured to a mounting surface by one of a number of means such as adhesive, adhesive tape, nails, screws, clips, clamps etc. The base surface 12 could be grooved or otherwise textured/contoured to improve any adhesive connection with the mounting surface or could even be contoured so as to mate with formations on the mounting surface.

The elongate body 11 also has a lengthwise extending hollow 18 within its thickness. The presence of the hollow 18 improves the flexibility of the device 10 for when it is secured to a suitable surface such as a wall, roof, window ledge. The hollow 18 is also effective to reduce weight and to reduce material usage. The hollow 18 is optional but in other arrangements one or more additional hollows could be provided within the cross-section of the elongate body 11.

In each sloping surface 13, 14 there is provided an elongate recess 19 which extends the full length of the elongate body 11 and which has a pair of lateral side edges 20. Each recess 19 receives an elongate metallic conductor 21 which also extends the full length of the elongate body 11. In this example, the metallic conductor 21 is in the form of a copper strip but the conductor could take the form of a wire or series of wires or a braided or knitted metallic strip. Copper is preferred in this embodiment due to its good conductivity but other metals may be suitable. The copper conductor allows a long length of track to be powered by a single energiser, the energiser usually being an expensive component of the deterrent system. In addition, copper is a relatively soft metal which enables the device 10 to have good flexibility for following the contours of the mounting surface. At the ends of the elongate body 11, the metallic conductors are arranged for connection to a supply of electricity, known as an energiser, in one of a number of known methods which are not shown or described here. It is also possible to introduce power between the ends of the metallic conductor using a 'jumper' which is known in the art.

Each recess 19 is sealed with a conductive polymer strip 22 which extends and seals with respect to the pair of lateral side edges 20 of the recess or the marginal portion of the elongate body adjacent the recess, thereby ensuring that the metallic conductor 21 is not exposed in the upward direction but is in good electrical contact with the conductive polymer strip 22. The metallic conductor is therefore shielded from the elements and corrosion can thereby be minimised or eliminated, thus prolonging the life of the deterrent device. In the deterrent device 10 the two conductive strips 22 are spaced from each other by a portion of the non-conductive elongate body 11.

The finished appearance of the device 10 is also improved by the provision of the strips 22. Also the device 10 has better wear resistance and durability from abrasion, particularly from trees or plants which grow to rub on the device or where contractors walk on or scrape equipment such as ladders over the device 10. Furthermore, the upper surface of the device 10 can be very smooth such that dirt and debris will flow off it particularly well when compared to known arrangements, especially when washed with rain water. Dirt and debris accumulations can cause unwanted arcing problems.

In preferred embodiments, the conductive polymer strip 22 is formed from a PVC polymer incorporating carbon black in the form of particles, flakes or fibres. One such conductive polymer is sold as Cabelec ® 3895 and it has a PVC base material which results in good bonding with the non-conductive PVC of the elongate body 11. Other conductive polymers are however available whilst still enabling good bonding with the elongate body 11. The base material of the polymers need not be the same as each other provided good bonding is effected.

Ideally, the PVC elongate body 11 and the conductive polymer strips 22 are co-extruded together around the elongate metallic conductors 21 such that the deterrent device 10 is formed in one manufacturing stage with the metallic conductors embedded between the elongate body 11 and the conductive strips 22. The extrusion process ensures a good contact between the metallic conductors 21 and the conductive polymer strips 22 and hence a good electrically conductive path from the metallic conductors 21 to the conductive polymer strips 22 and ultimately to the creature which contacts the strips 22. The co-extrusion process of manufacture is also cheaper because it is a single stage process whereas prior art arrangements require two stages of manufacture, namely extrusion of the body and then attachment of the metallic conductors by stitching for example if the metallic conductor is a braided or knitted mesh. Other manufacturing methods are possible whilst still ensuring effective operation.

The precise geometry of the deterrent device is a matter of design choice and will depend on the type of creatures to be deterred. In one particularly effective arrangement for birds the lateral width of the elongate body 11 is 36mm, the height of the apex 15 is 8mm, the lateral overhang of the lateral edges 16, 17 is 2mm, the copper strip 21 is 3mm wide and 0.5mm thick, the conductive polymer strip 22 is 4mm wide so as to cover the copper strip and bond with the adjacent portions of the elongate body 11, and the straight line spacing between the inner edges of the two polymer strips is 15mm. This is however only one example of a suitable arrangement.

Conductive polymers tend to be relatively expensive and the more conductive the polymer then the more expensive the product. It could be possible in some circumstances to have a deterrent device 10 as described above but with the metallic conductor 21 omitted such that the elongate, non-conductive body 11 is co-extruded with the strips 22 of conductive polymer. The energiser can then be attached directly to the strips 22 of conductive polymer. Again, manufacture is accomplished in a single stage process and the device still benefits from the advantages described above as a result of the presence of the conductive polymer strips rather than bare wire or braided/knitted mesh conductor.

## Claims

1. A deterrent device (10) comprising an elongate body (11) formed from an insulating material, at least one elongate metallic conductor (21) and at least one conductive polymer strip (22) in contact with the or each metallic conductor (21) along its full length such that the upward facing surface of the metallic conductor (21) is not exposed **characterised in that** said at least one metallic conductor (21) is provided on an upward facing surface of the elongate body (11), **in that** said at least one conductive polymer strip (22) is provided over the or each metallic conductor (21) and seals with the elongate body (11) on each lateral side of the metallic conductor (21) with the metallic conductor (21) disposed and held captive therebetween.

2. A deterrent device as claimed in claim 1 wherein two elongate metallic conductors (21) are provided on the device (10), each being covered with a conductive polymer strip (22).

3. A deterrent device as claimed in claim 2 wherein the two metallic conductors (21) are parallel to each other along the length of the elongate body (11).

4. A deterrent device as claimed in claim 2 or claim 3 wherein the upward facing surface of the elongate body (11) has two elongate sloping surfaces (13, 14) which meet at a central raised elongate apex (15), one metallic conductor (21) being provided on each side of the apex (15).

5. A deterrent device as claimed in any one of claims 1 to 4 wherein each metallic conductor (21) is received in a recess (19) formed in the upward facing surface of the elongate body (11), the recess (19) having elongate lateral side edges (20).

6. A deterrent device as claimed in claim 5 wherein the conductive polymer strip (22) extends from one lateral edge (20) of the recess to the other, thereby sealing the metallic conductor (21) in the recess (19).

7. A deterrent device as claimed in any one of claims 1 to 6 wherein the elongate body (11) incorporates a lengthwise extending hollow (18) open only at its two ends.

8. A deterrent device as claimed in any one of claims 1 to 7 wherein the elongate body (11) has a base surface (12) oppositely disposed to said upward facing surface, the upward facing surface overhanging the base surface along each lateral edge (16, 17) of the elongate body.

9. A deterrent device as claimed in any one of claims 1 to 8 wherein the conductive polymer strip (22) is made from PVC incorporating carbon black in the form of particles or filaments.

10. A method of producing a deterrent device as claimed in any one of claims 1 to 9 comprising the step of co-extruding the elongate body (11) and the conductive polymer strip or strips (22) with the metallic conductor (21) disposed and held captive therebetween.

## Patentansprüche

1. Abschreckungsvorrichtung (10), umfassend einen aus isolierendem Material geformten länglichen Körper (11) mit wenigstens einem länglichen metallischen Leiter (21) und wenigstens einen leitfähigen Polymerstreifen (22) in Kontakt mit dem oder jedem metallischen Leiter (21) entlang seiner vollen Länge, so dass die nach oben weisende Oberfläche des metallischen Leiters (21) nicht exponiert ist, **dadurch gekennzeichnet, dass** der wenigstens eine metallische Leiter (21) auf einer nach oben gerichteten Oberflächen des länglichen Körpers (11) bereitgestellt ist und dass wenigstens ein leitfähige Polymerstreifen (22) über dem oder jedem metallischen Leiter (21) bereitgestellt ist und den langgestreckten Körper (11) auf jeder lateralen Seite des metallischen Leiters (21) gegen den metallischen Leiter (21) abdichtet, der unverlierbar dazwischen angeordnet ist.

2. Abschreckungsvorrichtung gemäß Anspruch 1, wobei zwei längliche metallische Leiter (21) an der Vorrichtung (10) bereitgestellt sind, die jeweils mit einem leitfähigen Polymerstreifen (22) abgedeckt sind.

3. Abschreckungsvorrichtung gemäß Anspruch 2, wobei die zwei metallischen Leiter (21) entlang der Länge des länglichen Körpers (11) parallel zueinander sind.

4. Abschreckungsvorrichtung gemäß Anspruch 2 oder Anspruch 3, wobei die nach oben weisende Oberfläche des länglichen Körpers (11) zwei längliche schräg abfallende Oberflächen (13, 14) hat, die sich an einem länglichen zentral erhobenen Scheitelpunkt (15) treffen, und ein metallischer Leiter (21) auf jeder Seite des Scheitelpunkts (15) bereitgestellt ist.

5. Abschreckungsvorrichtung gemäß einem der Ansprüche 1 bis 4, wobei jeder metallische Leiter (21) in einer Vertiefung (19) in der nach oben gerichteten Oberfläche des länglichen Körpers (11) aufgenommen ist und die Vertiefung (19) längliche Seitenkanten (20) hat.

6. Abschreckungsvorrichtung gemäß Anspruch 5, wobei der leitfähige Polymerstreifen (22) sich von einer Seitenkante (20) der Vertiefung zu der anderen ausdehnt und dadurch den metallischen Leiter (21) in der Vertiefung (19) abdichtet.

7. Abschreckungsvorrichtung gemäß einem der Ansprüche 1 bis 6, wobei der längliche Körper (11) einen sich in Längsrichtung erstreckenden Hohlraum (18) aufweist, der nur an seinen beiden Enden offen ist.

8. Abschreckungsvorrichtung gemäß einem der Ansprüche 1 bis 7, wobei der längliche Körper (11) eine Grundfläche (12) besitzt, die gegenüber der nach oben weisenden Oberfläche angeordnet ist, wobei die nach oben weisende Oberfläche die Grundfläche entlang jeder Seitenkante (16, 17) des länglichen Körpers überragt.

9. Abschreckungsvorrichtung gemäß einem der Ansprüche 1 bis 8, wobei der leitfähige Polymerstreifen (22) aus PVC hergestellt ist und Ruß in Form von Partikeln oder Fasern enthält.

10. Verfahren zur Herstellung einer Abschreckungsvorrichtung gemäß einem der Ansprüche 1 bis 9, umfassend den Schritt des Co-Extrudierens des länglichen Körpers (11) und des leitfähigen Polymerstreifens oder der leitfähigen Polymerstreifen (22) mit dem dazwischen unverlierbar angeordneten metallischen Leiter (21).

## Revendications

1. Dispositif de dissuasion (10) comprenant un corps allongé (11) formé à partir d'un matériau isolant, d'au moins un conducteur métallique allongé (21) et d'au moins une bande de polymère conducteur (22) en contact avec le ou chaque conducteur métallique (21) sur toute sa longueur de telle sorte que la surface orientée vers le haut du conducteur métallique (21) ne soit pas exposée, **caractérisé en ce que** ledit au moins un conducteur métallique (21) est prévu sur une surface orientée vers le haut du corps allongé (11), **en ce qu'**au moins une bande de polymère conducteur (22) est prévue sur le ou chaque conducteur métallique (21) et se scelle avec le corps allongé (11) sur chaque côté latéral du conducteur métallique (21) avec le conducteur métallique (21) disposé et retenu prisonnier entre eux.

2. Dispositif de dissuasion selon la revendication 1, où deux conducteurs métalliques allongés (21) sont prévus sur le dispositif (10), chacun étant recouvert d'une bande de polymère conducteur (22).

3. Dispositif de dissuasion selon la revendication 2, où les deux conducteurs métalliques (21) sont parallèles l'un à l'autre sur la longueur du corps allongé (11).

4. Dispositif de dissuasion selon la revendication 2 ou 3, où la surface orientée vers le haut du corps allongé (11) comporte deux surfaces inclinées allongées (13, 14) qui se rencontrent à un sommet allongé surélevé central (15), un conducteur métallique (21) étant prévu sur chaque côté du sommet (15).

5. Dispositif de dissuasion selon l'une quelconque des revendications 1 à 4, où chaque conducteur métallique (21) est reçu dans un retrait (19) formé dans la surface orientée vers le haut du corps allongé (11), le retrait (19) ayant des bords latéraux allongés (20).

6. Dispositif de dissuasion selon la revendication 5, où la bande de polymère conducteur (22) s'étend d'un bord latéral (20) du retrait à l'autre, scellant ainsi le conducteur métallique (21) dans le retrait (19).

7. Dispositif de dissuasion selon l'une quelconque des revendications 1 à 6, où le corps allongé (11) incorpore un creux s'étendant longitudinalement (18) ouvert uniquement à ses deux extrémités.

8. Dispositif de dissuasion selon l'une quelconque des revendications 1 à 7, où le corps allongé (11) a une surface de base (12) disposée de manière opposée à ladite surface orientée vers le haut, la surface orientée vers le haut surplombant la surface de base le long de chaque bord latéral (16, 17) du corps allongé.

9. Dispositif de dissuasion selon l'une quelconque des revendications 1 à 8, où la bande de polymère conducteur (22) est fabriquée à partir de PVC incorporant du noir de carbone sous forme de particules ou de filaments.

10. Procédé pour produire un dispositif de dissuasion selon l'une quelconque des revendications 1 à 9, comprenant l'étape de co-extrusion du corps allongé (11) et de la bande ou des bandes de polymère conducteur (22) avec le conducteur métallique (21) disposé et retenu prisonnier entre eux.
